# EUROPÄISCHE PATENTANMELDUNG

(11) **EP 1 389 692 A1**
(43) Veröffentlichungstag der Anmeldung: **18.02.2004**
(21) Anmeldenummer: 02018490.9
(22) Anmeldetag: 16.08.2002
(51) Int. Cl.: F16B 39/28, F16B 39/284, F16B 39/01

(54) **Selbstsichernde Befestigungsvorrichtung**

(71) Anmelder: SIEMENS AKTIENGESELLSCHAFT, 80333 München (DE)
(72) Erfinder: Tiemann, Peter, 58452 Witten (DE)

(57) **Zusammenfassung**

Eine selbstsichernde Befestigungsvorrichtung (1) weist eine Buchse (2) mit einem in ein Gehäuse einschraubbaren Außengewinde (4) und einem Innengewinde (8) auf, welches zumindest im in das Gehäuse eingeschraubten Zustand einen ovalen Querschnittsbereich (9) aufweist. In den ovalen Querschnittsbereich (9) der Buchse (2) ist eine Schraube (3) eindrehbar. Die selbstsichernde Befestigungsvorrichtung (1) eignet sich besonders zur Befestigung einer Brennkammerinnenverkleidung (28) in einer Brennkammer (24) einer Gasturbine (22).

## Beschreibung

Die Erfindung betrifft eine selbstsichernde Befestigungsvorrichtung mit mindestens einem schraubbaren Befestigungselement.

Eine Befestigungsvorrichtung mit einem schraubbaren Befestigungselement, beispielsweise einer Schraube oder einer Mutter, ist häufig mit einer Losdrehsicherung ausgerüstet. Um das Losdrehen des schraubbaren Befestigungselementes zu verhindern, werden häufig mitverspannte federnde Elemente wie Tellerfedern oder Spannscheiben verwendet. Des Weiteren werden als Sicherung gegen Losdrehen sowie als Verliersicherung oft formschlüssige Elemente wie Kronenmuttern, Schrauben mit Splintloch sowie Scheiben mit Außennase verwendet. Als Losdrehsicherung werden ferner auch sperrende Elemente wie Sperrzahnschrauben und Sperrzahnmuttern verwendet. Als klemmende Elemente sind beispielsweise Muttern mit Kunststoffeinsatz sowie Schrauben mit Kunststoffbeschichtung im Gewinde üblicherweise im Einsatz. Hierbei ist jedoch die Temperaturabhängigkeit der Sicherungswirkung dieser Befestigungselemente zu beachten.

Bei Anwendungen mit besonders hohen Zuverlässigkeitsanforderungen, beispielsweise der Befestigung einer Brennkammerinnenverkleidung in einer Gasturbine, sind häufig mehrere Sicherungsmaßnahmen gegen Losdrehen von Befestigungselementen gleichzeitig realisiert. Dies können beispielsweise Tellerfederpaket, Gegensicherung und angegossene Hakensperre sein. Die Summe der insgesamt eingesetzten Teile bedingt in diesem Fall einen hohen fertigungstechnischen Aufwand.

Eine Einsparung von Teilen ist grundsätzlich durch selbstsichernde Schraubenelemente möglich. Beispielsweise kann, wie z.B. aus der DE 40 34 445 A1 bekannt, eine einstückig gefertigte Schraubenmutter an einem Ende oval verpresst sein. Dieses Befestigungselement wird jedoch nicht allen beispielsweise im Gasturbinenbau herrschenden Belastungs- und Zuverlässigkeitsanforderungen gerecht. Zudem ist es nachteilig, dass aufgrund der Deformation des Gewindes der Mutter auch deren Außenform von der Symmetrieform abweicht. Dadurch kann es problematisch sein, die Mutter mit einem üblichen Schraubenschlüssel festzuziehen oder zu lösen.

Der Erfindung liegt die Aufgabe zugrunde, eine selbstsichernde Befestigungsvorrichtung mit mindestens einem schraubbaren Befestigungselement anzugeben, die sich durch eine besonders zuverlässige Sicherung bei zugleich einfacher Betätigbarkeit auszeichnet.

Diese Aufgabe wird erfindungsgemäß gelöst durch eine selbstsichernde Befestigungsvorrichtung mit den Merkmalen des Anspruchs 1. Hierbei weist eine selbstsichernde Befestigungsvorrichtung eine Buchse mit einem in ein Gehäuse einschraubbaren Außengewinde und einem Innengewinde sowie eine Schraube auf, die in das Innengewinde der Buchse einschraubbar ist. Die Buchse ist dabei derart ausgebildet, dass deren Innengewinde, zumindest sobald die Buchse in das Gehäuse eingeschraubt ist, einen ovalen Querschnittsbereich aufweist. Das Außengewinde der Buchse kann dabei ebenso wie das mit diesem korrespondierende Innengewinde des Gehäuses einen üblichen kreisförmigen Querschnitt aufweisen. In diesem Fall weist das Innengewinde der Buchse - unabhängig davon, ob diese ins Gehäuse eingeschraubt ist - einen ovalen Querschnittsbereich auf. Andernfalls, d.h. falls das Innengewinde der Buchse im unbelasteten Zustand durchgehend kreisförmig ist, weicht das Außengewinde der Buchse und/oder das korrespondierende Innengewinde des Gehäuses zumindest in einem jeweiligen Teilbereich derart von der Kreisform ab, dass das Innengewinde beim Einschrauben der Buchse in das Gehäuse zumindest teilweise in eine Ovalform gezwungen wird. Unter einem Gehäuse wird hierbei jegliche Halterung verstanden, in die die Buchse einschraubbar ist. Durch die zumindest geringfügig ovale Ausbildung wenigstens eines Teils des Innengewindes der Buchse ist die Verschraubung zwischen der Buchse und der Schraube aufgrund der damit erzeugten Klemmwirkung zuverlässig gesichert. Unter einem ovalen Querschnittsbereich ist hierbei nicht ausschließlich eine ovale Form im geometrisch strengen Sinne zu verstehen, sondern ebenso eine auf andere Weise ausgebildete Abweichung von der Kreisform, durch die ein Klemmeffekt erzielbar ist.

Zur Erzielung eines ausreichenden Klemmeffektes ist eine nur geringfügige Abweichung des ovalen Querschnittsbereichs des Innengewindes der Buchse von der Kreisform ausreichend. Vorzugsweise beträgt die maximale Abweichung des ovalen Querschnittsbereichs von der Kreisform nicht mehr als 5% des Nenndurchmessers der Schraube. Hierdurch ist sichergestellt, dass die Betätigungskräfte beim Einschrauben und Lösen der Schraube nicht zu hoch sind sowie keine zu hohen mechanischen Spannungen in die Schraube, die Buchse und/oder das Gehäuse eingebracht werden. Das Innengewinde der Buchse ist weiterhin bevorzugt derart ausgebildet, dass die Schraube beim Einschrauben in die Buchse zunächst in einen kreisrunden Bereich des Innengewindes der Buchse eingreift und sich dieser allmählich in eine Ovalform deformiert. Auf diese Weise ist eine leichte Einschraubbarkeit der Schraube in die Buchse sichergestellt.

Vorzugsweise ist die Buchse von einer Seite, beispielsweise der Außenseite, in das Gehäuse einschraubbar und die Schraube von der anderen Seite des Gehäuses in die Buchse einschraubbar. Damit ist, sofern die Öffnung im Gehäuse, in die die Buchse eingeschraubt ist, einen geringeren Durchmesser als der Maximaldurchmesser - im Allgemeinen der Kopfdurchmesser - der Buchse sowie der Schraube aufweist, ein Herausfallen der mit der Buchse verbundenen Schraube aus der Öffnung selbst dann ausgeschlossen, wenn sich das Außengewinde der Buchse vollständig vom Gehäuse löst.

Die Orientierungen des Innengewindes und des Außengewindes der Buchse sind bevorzugt zueinander entgegengesetzt. Dies gilt insbesondere, falls die Buchse von einer Seite in das Gehäuse und die Schraube von der anderen Seite des Gehäuses in die Buchse einschraubbar ist. Beispielsweise ist das Außengewinde der Buchse ein Linksgewinde und das Innengewinde der Buchse ein Rechtsgewinde. Hierdurch wird durch das Festziehen der Schraube in der Buchse zugleich auch die Buchse im Gehäuse angezogen.

Sofern die Buchse und die Schraube von derselben Seite in das Gehäuse einschraubbar sind, weisen das Außengewinde und das Innengewinde der Buchse vorzugsweise dieselbe Orientierung auf, um bei einem Einschrauben der Schraube in die Buchse die Buchse im Gehäuse mit festzuziehen. Diese alternative Ausführungsform ist beispielsweise in Fällen zweckmäßig, in denen aufgrund eingeschränkter Zugänglichkeit eine Montage der Buchse und der Schraube von der selben Seite des Gehäuses aus vorgesehen ist.

Nach einer bevorzugten Weiterbildung ist die Schraube innen kühlbar. Beispielsweise kann hierzu eine Bohrung die Schraube sowie die Buchse axial durchdringen. Auf diese Weise kann beispielsweise ein Kühlmedium von der Außenseite auf die Innenseite des Gehäuses strömen. Ist eine derartige Kühlmittelströmung, die axial vollständig durch die Buchse und die Schraube hindurch geht, nicht erwünscht, so ist nach einer besonders bevorzugten Weiterbildung die Schraube geschlossen kühlbar ausgebildet. Vorzugsweise ist insbesondere kein Kühlmittelaustritt oder -eintritt aus dem beziehungsweise in den Schraubenkopf längs der Schraubenachse ermöglicht. Ist durch die Schraube am Gehäuse ein weiteres Bauteil befestigt, so ist die so genannte geschlossene Kühlmittelführung bevorzugt derart gestaltet, dass das Kühlmittel außerhalb von dem Gehäuse und dem daran befestigten Bauteil in die Schraube eingeleitet wird und in einem Raum, der zwischen dem Gehäuse und dem daran befestigten Bauteil eingeschlossen ist, aus der Schraube austritt.

Die Elastizitätseigenschaften der Schraube sowie der Buchse unterscheiden sich vorzugsweise derart voneinander, dass sich die Schraube beim Eindrehen in die Buchse geringer als die Buchse verformt. Hierzu weist die Schraube ein höheres Elastizitätsmodul als die Buchse auf. Die Schraube ist dabei auf die Aufnahme hoher Zugkräfte ausgelegt und weist eine hohe Festigkeit sowie eine geringe Bruchdehnung auf. Die Schraube ist beispielsweise aus einem Gussmaterial gefertigt, während die Buchse aus einem Material mit größerer elastischer Nachgiebigkeit gefertigt ist.

Die erfindungsgemäße selbstsichernde Befestigungsvorrichtung ist besonders geeignet für die Befestigung einer Brennkammerinnenverkleidung an einer Gasturbinenbrennkammer.

Nachfolgend wird ein Ausführungsbeispiel der Erfindung anhand einer Zeichnung näher erläutert. Hierin zeigen
- FIG 1: eine selbstsichernde Befestigungsvorrichtung mit einer Buchse und einer Schraube im gelösten Zustand,
- FIG 2: die Befestigungsvorrichtrung nach FIG 1 im verbundenen Zustand,
- FIG 3: eine Gasturbine mit einer Gasturbinenbrennkammer mit einer Befestigungsvorrichtung nach FIG 1 und 2,
- FIG 4a,b: eine Buchse einer selbstsichernden Befestigungsvorrichtung in einer alternative Ausführungsform.

Einander entsprechende Teile sind in allen Figuren mit den gleichen Bezugszeichen gekennzeichnet.

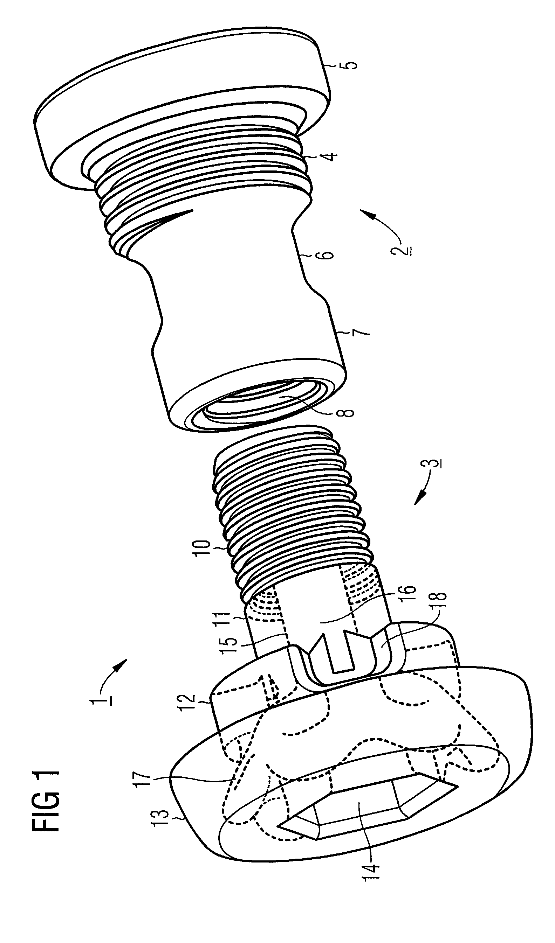

FIG 1 zeigt eine selbstsichernde Befestigungsvorrichtung 1 mit einer Buchse 2 und einer in diese einschraubbare Schraube 3. Die Buchse 2 weist ein Außengewinde 4 auf, mit dem diese in ein hier nicht dargestelltes Gehäuse, beispielsweise die Wandung einer Gasturbinenbrennkammer, einschraubbar ist. Das Außengewinde 4 ist ein Linksgewinde. Oberhalb des Außengewindes 4 schließt sich an dieses ein Kopfstück 5 an, das im eingebauten Zustand der Buchse 2 an der Außenwand der Gasturbinenbrennkammmer anliegt. Unterhalb des Außengewindes 4 schließt sich an dieses ein Verjüngungsstück 6 sowie ein im Vergleich zu diesem etwas verdicktes Fußstück 7 an. Sowohl das Fußstück 7 als auch das Verjüngungsstück 6 haben einen geringeren Durchmesser als das Außengewinde 4, so dass die Buchse 2 von außen in eine Öffnung in der Wandung der Gasturbinenbrennkammer einsteckbar ist und dort in einem mit dem Außengewinde 4 korrespondierenden Linksgewinde festschraubbar ist. Das Verjüngungsstück 6 sowie das Fußstück 7 ragen dabei in die Gasturbinenbrennkammer hinein.

Am Fußstück 7 der Buchse 2 befindet sich konzentrisch zum Außengewinde 4 ein als Rechtsgewinde ausgebildetes Innengewinde 8, das innerhalb der Buchse 2 - in dieser Darstellung nicht sichtbar - in einen ovalen Querschnittsbereich 9 übergeht. Der ovale Querschnittsbereich 9 befindet sich im Verjüngungsstück 6. In das Innengewinde 8 der Buchse 2 ist ein Außengewinde 10 der Schraube 3 einschraubbar. Beim Eindrehen der Schraube 3 in die Buchse 2 greift das Außengewinde 10 der Schraube 3 zunächst in einige Gewindegänge des Innengewindes 8 der Buchse 2 ein, die einen kreisförmigen Querschnitt haben. Beim weiteren Festdrehen der Schraube 3 greift dessen Außengewinde 10 zunehmend in Gewindegänge des Innengewindes 8 ein, die in eine ovale Querschnittsform übergehen. Dieser in gewollter Weise zunehmende Drehmomentbedarf zum Anziehen der Schraube 3 sorgt zugleich dafür, dass die Buchse 2 mit deren als Linksgewinde ausgebildetem Außengewinde 4 in der Wandung der Gasturbinenbrennkammer festgezogen wird.

Die Schraube 3 weist anschließend an einen Schraubenschaft 11, der das Außengewinde 10 aufweist, einen verdickten Schraubenkragen 12 sowie unmittelbar an diesen anschließend einen nochmals verdickten Schraubenkopf 13 auf. Der Schraubenkopf 13 ist zur Betätigung mittels Kraft-Innenangriff vorgesehen und weist eine sechseckige Betätigungsöffnung 14 auf. Die Schraube 3 weist ein Kühlsystem 15 auf, das eine konzentrisch zum Schraubenschaft 11 angeordnete Kühlungsbohrung 16, hauptsächlich im Schraubenkopf 13 liegende, an die Kühlungsbohrung 16 anschließende, gekrümmte Kühlungskanäle 17 sowie am Schraubenkragen 12 drei rotationssymmetrisch angeordnete Kühlungsöffnungen 18 aufweist, an denen die Kühlungskanäle 17 enden.

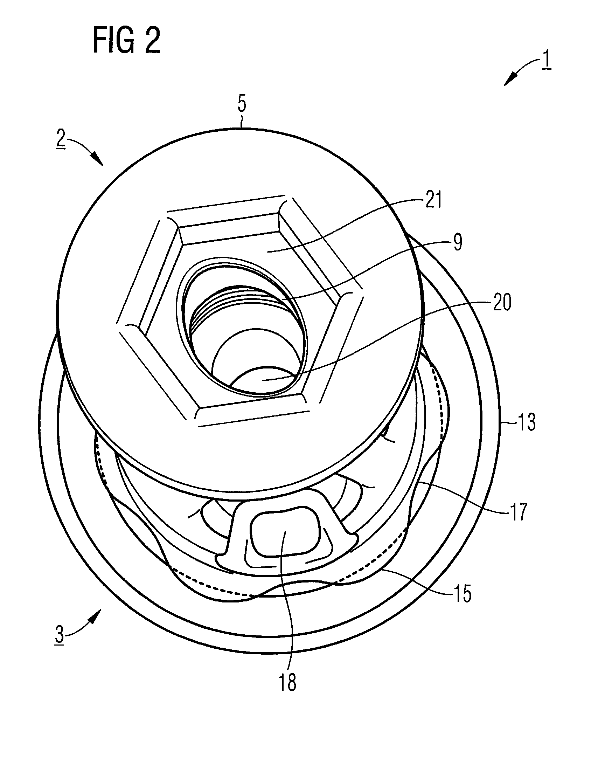

Der Eintritt des Kühlmittels, insbesondere Kühlluft, in die Schraube 3 erfolgt, wie aus FIG 2 ersichtlich ist, durch eine an der Stirnseite 19 des Schraubenschaftes 11 angeordnete Kühlungsöffnung 20. In FIG 2 ist auch der ovale Querschnittsbereich 9 der Buchse 2 gut erkennbar. Ein Kühlmitteleintritt in die Schraube 3 ist durch eine sechseckige Betätigungsöffnung 21 im Kopfstück 5 der Buchse 2 und den ovalen Querschnittsbereich 9 hindurch möglich. Das Kühlmittel strömt axial durch die Buchse 2 und weiter durch die Schraube 3 bis zum Schraubenkopf 13, tritt jedoch aus diesem nicht aus, sondern wird umgelenkt, um am Schraubenkragen 12 auszutreten. Am Schraubenkopf 13 ist eine - hier nicht dargestellte - Brennkammerinnnenverkleidung gehalten, wobei zwischen der Wandung der Gasturbinenbrennkammer und der Brennkammerinnenverkleidung ein Hohlraum gebildet ist. In diesen Hohlraum strömt das aus den Kühlungsöffnungen 18 austretende Kühlmittel.

Die Buchse 2 sowie die Schraube 3 sind jeweils einstückig ausgebildet. Die Schraube 3 ist aus einem Gussmaterial mit sehr hoher Zugfestigkeit ausgebildet. Die Buchse 2 ist dagegen aus einem Material mit vergleichsweise hoher elastischer Nachgiebigkeit hergestellt. Die Lage der Sicherungsstelle der Befestigungsvorrichtung 1 im Bereich des ovalen Querschnittsbereichs 9 bewirkt, dass der Kraftfluss durch die mit der Buchse 2 gegenverschraubte Schraube 3 durch die Sicherungsstelle erfolgt. Hierdurch ist eine besonders zuverlässige Sicherung mit einer Selbsthemmung erreicht. Bei alternativer Parallelschaltung des Außengewindes 4 der Buchse 2 mit dessen Innengewinde 8, beispielsweise einer jeweiligen Ausbildung als Rechtsgewinde, kann die Sicherungsstelle, außer beim Einschrauben der Schraube 2, zumindest weitgehend kräftefrei sein.

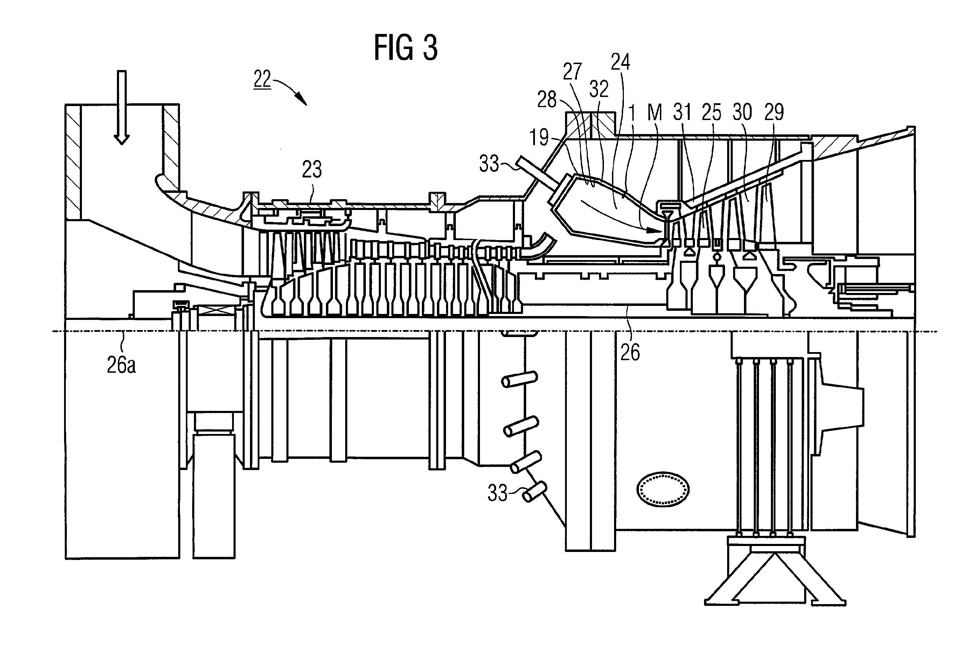

In FIG 3 ist schematisch im Querschnitt eine Gasturbine 22 dargestellt. Die Gasturbine 22 weist einen Verdichter 23 für Verbrennungsluft, eine Brennkammer 24 sowie eine Turbine 25 zum Antrieb des Verdichters 23 und eines nicht dargestellten Generators oder einer Arbeitsmaschine auf. Dazu sind die Turbine 25 und der Verdichter 23 auf einer gemeinsamen, auch als Turbinenläufer bezeichneten Turbinenwelle 26 angeordnet, mit der auch der Generator bzw. die Arbeitsmaschine verbunden ist, und die um ihre Mittelachse 26a drehbar gelagert ist.

Die Brennkammer 24 ist mit einer Anzahl von Brennern 33 zur Verbrennung eines flüssigen oder gasförmigen Brennstoffs bestückt. Sie ist weiterhin an ihrer Innenwand 27 mit einer Brennkammerinnenverkleidung 28 ausgekleidet.

Die Turbine 25 weist eine Anzahl von mit der Turbinenwelle 26 verbundenen, rotierbaren Laufschaufeln 29 auf. Die Laufschaufeln 29 sind kranzförmig an der Turbinenwelle 26 angeordnet und bilden somit eine Anzahl von Laufschaufelreihen. Weiterhin umfasst die Turbine 25 eine Anzahl von feststehenden Leitschaufeln 30, die ebenfalls kranzförmig unter der Bildung von Leitschaufelreihen an einem Innengehäuse 31 der Turbine 25 befestigt sind. Die Lauf schaufeln 29 dienen damit zum Antrieb der Turbinenwelle 26 durch Impulsübertrag vom die Turbine 25 durchströmenden Arbeitsmedium M. Die Leitschaufeln 30 dienen hingegen zur Strömungsführung des Arbeitsmediums M zwischen jeweils zwei in Strömungsrichtung des Arbeitsmediums M gesehen aufeinanderfolgendenden Laufschaufelreihen oder Laufschaufelkränzen. Ein aufeinanderfolgendes Paar aus einem Kranz von Leitschaufeln 30 oder einer Leitschaufelreihe und aus einem Kranz von Laufschaufeln 29 oder einer Laufschaufelreihe wird dabei als Turbinenstufe bezeichnet.

Um einen hohen Wirkungsgrad der Gasturbine 22 zu ermöglichen wird die Gasturbine 22 mit einer hohen Temperatur des Arbeitsmediums M betrieben. Das Arbeitsmedium M tritt aus der Brennkammer 24 mit einer Temperatur von ca. 1200 bis 1300°C aus. Die der Verbrennung zugeführte komprimierte Verbrennungsluft wird in einem Mantelraum 32, der zwischen der Innenwand 27 der Brennkammer 24 und der Brennkammerinnenverkleidung 28 gebildet ist, vor dem Eintritt in den Brenner 33 vorgewärmt. Dadurch wird gleichzeitig die Innenwand 27 der Brennkammer 24 gekühlt. Die selbstsichernde Befestigungsvorrichtung 1, die die Brennkammerinnenverkleidung 28 an der Innenwand 27 der Brennkammer 24 hält, ist unter diesen Betriebsbedingungen hohen mechanischen und thermischen Belastungen ausgesetzt. Der Schraubenkopf 13 der Schraube 3 ragt in die Brennkammer 24 hinein. Durch die selbstsichernde Ausbildung der Verbindung zwischen der Schraube 3 und der Buchse 2 wird zuverlässig vermieden, dass sich die Schraube 3 in der Brennkammer 24 löst, was gravierende Schäden in der Turbine 25 zur Folge hätte. Die geforderte sehr hohe Sicherheit der Befestigung der Brennkammerinnenverkleidung 28 an der Innenwand 27 der Brennkammer 24 ist mit der Befestigungsvorrichtung 1 mit geringem Fertigungs- und Montageaufwand erreicht.

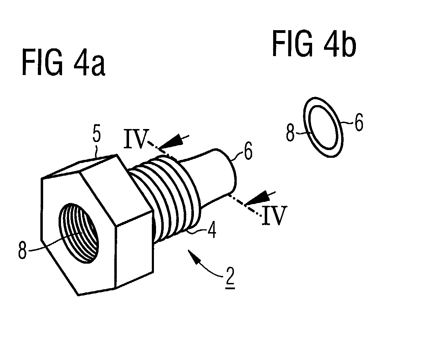

FIG 4a zeigt eine alternative Ausführungsform einer Buchse 2, welche zusammen mit einer hier nicht dargestellten Schraube 3 eine selbstsichernde Befestigungsvorrichtung 1 bildet. Die Schraube 3 ist in diesem Fall von der selben Seite eines Gehäuses in die Buchse 2 einschraubbar, von der auch die Buchse 2 in das Gehäuse einschraubbar ist. Ein Kopfstück 5 der Buchse 2 weist in diesem Fall eine äußere Sechskantform auf. Die Schraube 3 ist in ein Innengewinde 8, welches im Bereich des Kopfstückes 5 einen kreisrunden Querschnitt aufweist, einschaubbar. In Richtung zu einem Verjüngungsstück 6, welches in diesem Fall am dem Kopfstück 5 gegenüberliegenden Ende der Buchse 2 angeordnet ist, geht der Querschnitt des Innengewindes 8 zunehmend von der kreisförmigen in eine ovale Form über. FIG 4b zeigt in übertriebener Darstellung den Querschnitt IV-IV der Buchse 2 nach FIG 4a im Bereich des Verjüngungsstückes 6. Die Schraube 3 und/oder die Buchse 2 können analog der Befestigungsvorrichtung nach FIG 1 innenkühlbar ausgeführt sein. Im in den FIG 4a,4b dargestellten Ausführungsbeispiel sind hiervon abweicheichend sowohl das Außengewinde 4 und das Innengewinde 8 der Buchse 2 als auch das Außengewinde 10 der in das Innengewinde 8 einschraubbaren Schraube 3 (FIG 1) als Rechtsgewinde ausgeführt.

## Patentansprüche

1. Selbstsichernde Befestigungsvorrichtung (1) mit
- einer Buchse (2) mit
- einem in ein Gehäuse einschraubbaren Außengewinde (4)
- einem Innengewinde (8) mit einem zumindest im in das Gehäuse eingeschraubten Zustand ovalen Querschnittsbereich (9)
- einer in den ovalen Querschnittsbereich (9) der Buchse (2) eindrehbaren Schraube (3).

2. Selbstsichernde Befestigungsvorrichtung (1) nach Anspruch 1, **dadurch gekennzeichnet, dass** die Abweichung des ovalen Querschnittsbereichs (9) von der Kreisform maximal 5% des Nenndurchmessers der Schraube (3) beträgt.

3. Selbstsichernde Befestigungsvorrichtung (1) nach Anspruch 1 oder 2, **dadurch gekennzeichnet, dass** die Buchse (2) von einer Seite in das Gehäuse und die Schraube (3) von der gegenüberliegenden Seite des Gehäuses in die Buchse (2) einschraubbar ist.

4. Selbstsichernde Befestigungsvorrichtung (1) nach Anspruch 3, **dadurch gekennzeichnet, dass** die Gewinderichtungen des Innengewindes (8) und des Außengewindes (10) der Buchse (2) entgegengesetzt zueinander sind.

5. Selbstsichernde Befestigungsvorrichtung (1) nach Anspruch 1 oder 2, **dadurch gekennzeichnet, dass** die Buchse (2) und die Schraube (3) von der selben Seite des Gehäuses in dieses beziehungsweise in die Buchse (2) einschraubbar ist.

6. Selbstsichernde Befestigungsvorrichtung (1) nach Anspruch 5, **dadurch gekennzeichnet, dass** die Gewinderichtungen des Innengewindes (8) und des Außengewindes (10) der Buchse (2) übereinstimmen.

7. Selbstsichernde Befestigungsvorrichtung (1) nach einem der Ansprüche 1 bis 6, **dadurch gekennzeichnet, dass** die Schraube (3) innen kühlbar ist.

8. Selbstsichernde Befestigungsvorrichtung (1) nach Anspruch 7, **dadurch gekennzeichnet, dass** die Schraube (3) geschlossen kühlbar ist.

9. Selbstsichernde Befestigungsvorrichtung (1) nach einem der Ansprüche 1 bis 8, **dadurch gekennzeichnet, dass** die Schraube (3) ein höheres Elastizitätsmodul als die Buchse (2) aufweist.

10. Gasturbinenbrennkammer mit einer eine Brennkammerinnenverkleidung (28) haltenden selbstsichernden Befestigungsvorrichtung (1) nach einem der Ansprüche 1 bis 7.
